# EUROPEAN PATENT APPLICATION

(11) **EP 1 386 832 A1**
(43) Date of publication of application: **04.02.2004**
(21) Application number: 02380247.3
(22) Date of filing: 03.12.2002
(51) Int. Cl.: B62H 3/12

(54) **Multiple stand for bicycles**

(30) Priority: 30.07.2002 ES 200201949 U
(71) Applicant: Ideilan Diseno, S.L., 48009 Bilbao (Vizcaya) (ES)
(72) Inventor: Santacoloma Moro, Juan, 48940 - Lejona (Vizcaya) (ES)
(74) Representative: Davila Baz, Angel

(57) **Abstract**

Multiple stand for bicycles, that is constructed based on a pole or column (1), fitted with a bottom pedestal (2) of attachment to the ground; a pole from which at an appropriate level a number of radial arms (4) emerge, equiangularly distributed, with their free end (5) orthogonally bent, acting as a support element for the front wheel (6) of two bikes, that remain thus vertically suspended in the arms of said pole.

## Description

### PURPOSE OF THE INVENTION.

This invention refers to a multiple stand, that has been specially conceived for the parking of bicycles, and that in particular is envisaged as an item of public use, intended to be placed in the street.

The purpose of the invention is to obtain a stand capable of holding several bicycles in vertical and horizontal disposition, with a minimum occupation of space, forming at the same time an item of urban fixture, that not alone lacks negative repercussions from the environmental viewpoint, but also acts very positively, being able to form a street light, an advertisement support, etc.

### BACKGROUND TO THE INVENTION

As is well known, for reasons of environmental contamination, there exists a trend towards the use of the bicycle as a means of transport, for short trips, within cities, that creates the need that parking areas for said bicycles are made available at street level, where the bicycles are held awaiting their reuse.

A bicycle tied by chain to a lamp, pillar, or any other architectural element of the public thoroughfare, is a typical image, creating an unpleasant and clearly undesirable visual impact.

In trying to avert this problem, stands for bicycles are known that consist of a metallic structure in which a number of flattened vertical housings are defined, dimensionally suitable to receive to the front wheel of the bicycles, partial or totally, each bicycle thus remaining stabilized in a vertical position, in a "bank" with others.

This solution undoubtedly improves the general aspect of the parking area, with all the bicycles remaining perfectly ordered and parallel to each other; but their use is restricted to very specific areas, given the considerable occupation of space that this solution implies.

### DESCRIPTION OF THE INVENTION

The stand that the invention proposes fully and satisfactorily solves the fore-mentioned difficulty, so that in a circular area of diameter approximately coincident with the length of a bicycle, up to eight bicycles can be held, perfectly located and stabilized, specifically, suspended in a vertical position from their front wheel.

For this purpose and more specifically, the stand that is proposed has a structure based on a central pole or column, with a lower pedestal for attachment to the ground; a pole from which a number of radial arms, equi-angularly distributed, emerge at an appropriate height, preferably eight in number, with their free end bent orthogonally, destined to form the support for the corresponding bicycle wheel, the length of such arm suitable so that said wheel rests on the pole while it remains suspended from its upper section.

Fins oppositely placed to said arms, preferably integral with them, create separated housings for the respective wheels in the circumference of the pole, that prevent these bicycles from touching each other during their coupling and uncoupling.

In accordance with another of the characteristics of the invention it is planned that the said arms are alternatively displaced vertically so that adjacent bicycles are also placed at different height levels, the most prominent parts remaining displaced in this sense, as for example, the pedals, avoiding that they interfere with each other.

Finally at the lower level of the pole separating struts are established between which it is intended that the rear wheels of the bicycles be secured, when these are placed in a vertical position, or the front or back wheel of bicycles arranged horizontally.

The pole or column can terminate on top in a lighting fitting, so that the stand forms a street lamp at the same time, it could terminate in an advertising board, or as any other object common in the urban fixture environment.

In the specific case that a street lamp or an illuminated advertising board is chosen, the pole or column will be hollow to allow access through it for the necessary electrical supply cables whose access to the pole will be via underground, as in any conventional street lamp.

### DESCRIPTION OF THE DRAWINGS

To supplement this description and with the aim of leading to a better understanding of the characteristics of the invention, in accordance with a preferred example of its practical embodiment, as an integral part of this description it is accompanied by a set of drawings where in an illustrative and non-limiting way, the following have been represented:
Figure 1. - Shows a front elevation schematic representation of a multiple stand for bicycles carried out in agreement with the purpose of this invention, suitably in accordance with a practical embodiment in which it simultaneously forms a stand for an advertising board.
Figure 2.- Shows a plan view of the stand of the previous figure.
Figure 3. - Shows a perspective of a similar stand to that of the previous figures, from which a bicycle is shown suspended.

### PREFERABLE EMBODIMENT OF THE INVENTION

In view of the figures depicted it can be observed how the stand that is proposed is formed based on a pole or column (1), that in the example of practical embodiment chosen, adopts a cylindrical configuration, but that can adopt any other; and that in any case emerges from a pedestal (2) fitted with means of securing to the ground, of any conventional type; the height of the pole (1 ) being notably greater than the longitudinal dimension of a bicycle (3), to allow the suspension of the latter, as will be seen further on.

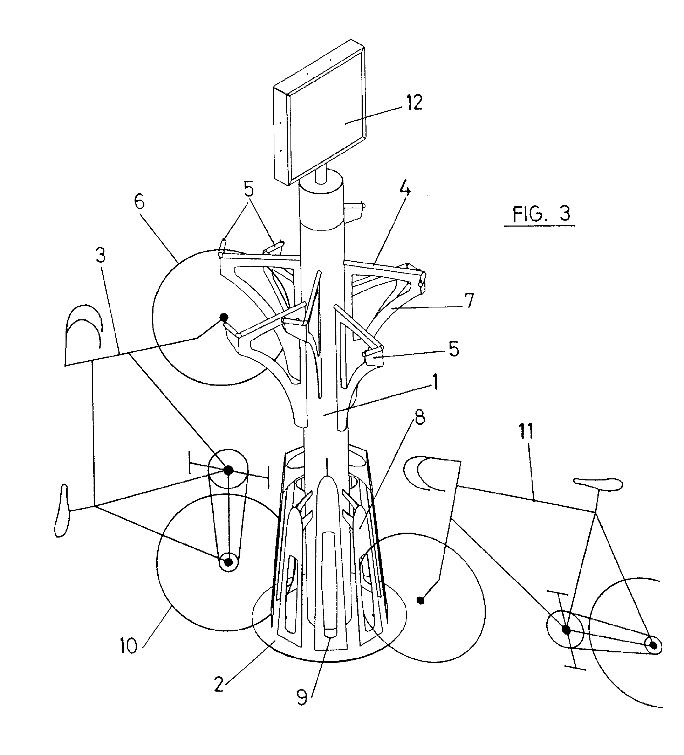

A number of arms (4) emerge radially and equi-angularly from the pole (1) at a suitable height level,with their extremity (5) free bent sideways and orthogonally, as can be observed especially in figure 2; these right-angled spurs (5) being destined to form the support for the front wheel (6) of the respective bicycles (3), as in turn seen in figure 3; and in this sense the length of the arms (4) is in turn appropriate so that those fore-mentioned wheels (6), suspended from the upper and their centre point, rest laterally against the pole (1 ), as can also be observed in figure 3.

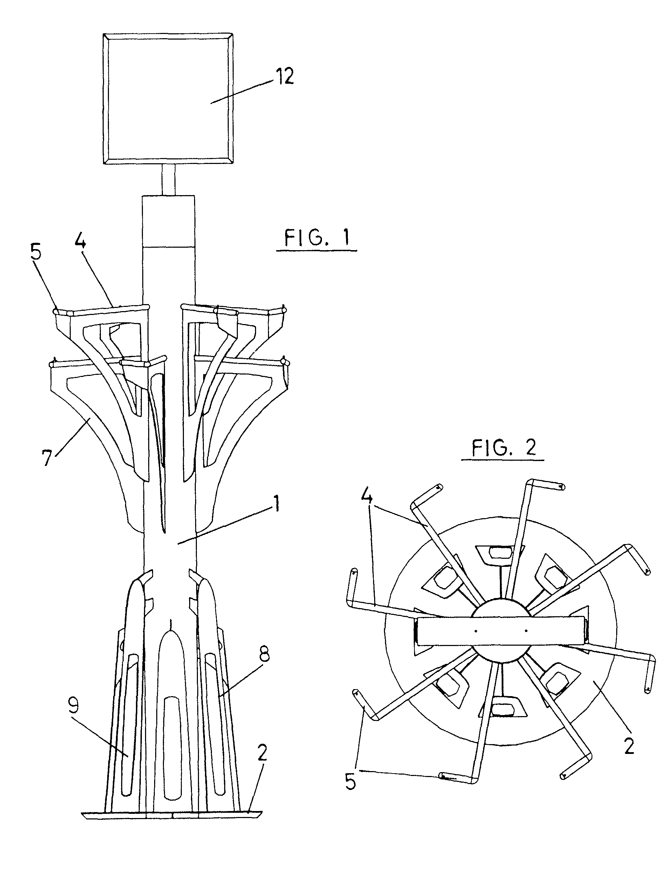

A strut (7) is placed in correspondence with the vertical plane of each arm (4) and below it; the strut can be independent of this arm (4), as in the example of practical embodiment of figure 3, or it can be integral with it, as in the case of figure 1, in any case these arms having the purpose of establishing guides or dihedral housings for the respective bicycles, avoiding that these collide with each other during the operations of coupling and uncoupling to the stand.

Other struts (8) placed at a lower level, have an opening or vertical slot (9) to receive the rear wheel (10) of the bicycle (3), assisting the struts (7), in the placing of the bicycle in a vertical position, as is shown in figure (3). The front or rear wheel of a bicycle (11 ) horizontally placed and positioned, can also be inserted in this slot or vertical opening (9), as can also be seen in figure (3).

In this way a stand is obtained in which up to eight bicycles (3) in vertical position and other eight bicycles (11 ) in horizontal position can be suspended from a pole (1) which implies an optimum use of the available space. In this sense and to improve the parking conditions, the arms (4) are alternatively vertically displaced, as has already been previously noted: and as is evident especially from the observation of figure 1, with which each bicycle remains displaced in height with regard to those adjacent, which ensures that the most prominent parts in the side of such bicycles are not placed opposite each other and that it be more difficult that they bump against each other.

Starting from this basic structuring the multiple stand, such as a bicycle stand, simultaneously, this can form an advertising stand, as in the example shown in the figures, in which an advertising board (12), that can even be illuminated, is fixed to the upper extremity of the pole (1 ), in which case the pole (1 ) will be hollow for access of the electrical supply cabling; however it being equally possible to substitute this advertising board (12) with a light fitting or glass lamp of a street light, or by any other ornamental part.

## Claims

1. A multiple stand for bicycles that, being envisaged as part of urban fixtures, is **characterized by** being formed based on a pole or column (1 ) fitted with a lower level pedestal (2) for securing to the ground, a pole in which at an appropriate height emerge a number of radial arms (4), distributed equi-angularly, with their free end (5) orthogonally bent, acting as a support element for the front wheel (6) of the respective bicycles that thus remain vertically suspended from the arms of the said pole.

2. Multiple stand for bicycles, according to claim 1, **characterised in that** the said arms are assisted by struts (7) in the same vertical plane as them, and that can be integral with them, constituent of dihedral and radial housings for separation of the front wheels of the respective bicycles.

3. Multiple stand for bicycles, according to previous claims **characterised in that** at a lower level of the pole radial struts (8), supplementary to the upper ones, are established, fitted with a window or vertical slot (9) destined to receive the rear wheel (10) of a bicycle placed in vertical position or the front or rear wheel of a bicycle (11 ) placed in horizontal position.

4. Multiple stand for bicycles, according to previous claims, **characterised in that** the pole terminates in its upper extremity in an advertising board (12), a lighting fitting or glass lamp of a street light or any ornamental part.

5. Multiple stand for bicycles, according to claim 4, **characterised in that** when the termination element of the pole is a means of illumination, as, for example, in the case of the glass lamp of a street light, the pole is hollow for access of electrical supply cabling through its interior.
